# EUROPEAN PATENT SPECIFICATION

(11) **EP 3 766 352 B1**
(45) Date of publication and mention of the grant of the patent: **18.10.2023**
(21) Application number: 20184179.8
(22) Date of filing: 06.07.2020
(51) Int. Cl.: A21C 11/10

(54) **CUTTING STATION FOR DOUGHS FOR FOOD USE**
SCHNEIDSTATION FÜR TEIGE ZUR VERWENDUNG IN LEBENSMITTELN
STATION DE DÉCOUPE DE PÂTES ALIMENTAIRES

(30) Priority: 17.07.2019 IT 201900012084
(43) Date of publication of application: 20.01.2021
(73) Proprietor: Minipan S.r.l., 48024 Massa Lombarda (RA) (IT)
(72) Inventor: FOSSA, Marco, 48010 COTIGNOLA RA (IT); LANDI, Alessandro, 48012 BAGNACAVALLO RA (IT)
(74) Representative: Modiano, Micaela Nadia

(56) References cited:
- EP-A1- 0 659 343
- WO-A1-2018/184983
- JP-B2- 5 339 358
- US-A1- 2003 047 052
- US-B2- 8 431 172

## Description

The present invention relates to a cutting station for doughs for food use.

Doughs for food use are generally obtained by processing flours (which can be of various types) with water and other ingredients.

These doughs are subjected to a leavening process, at the end of which they can be divided in portions of predefined volume, or mass, to which specific shapes will be given.

The formats thus provided may in turn be cut according to the final production standards of the product that one wishes to obtain before being baked.

The cutting operations are normally provided by using cutters actuated with a reciprocating motion which periodically descend toward the dough format that advances along a conveyor belt and divide it into portions of predefined length.

This type of cut is adapted only for medium-low advancement speeds of the dough format along the conveyor belt.

Upon increasing advancement speed, cutting is scarcely precise and can cause deformations on the portions.

It is known to use rotary cutting assemblies provided with cutters arranged according to the vertices of a polygon, with a substantially radial orientation. The rotation of the assembly makes each cutter cyclically assume the cutting configuration with respect to the dough format.

This type of assembly allows to manage higher advancement speeds of the dough format on the conveyor belt but can in any case cause deformations of the portions (the rotation of the cutter can push a front of the dough portion, modifying its shape and/or dimensions).

US 2003/047052 A1 discloses an apparatus for the processing of a strip of dough.

The aim of the present invention is to solve the problems described above by proposing a cutting station for doughs for food use that can operate substantially at any advancement speed of the dough on the respective conveyor belt.

Within the scope of this aim, an object of the invention is to provide a cutting station for doughs for food use that is versatile and therefore adapted to perform any type of cutting on the dough with any frequency.

Another object of the invention is to provide a cutting station for doughs for food use that does not damage or deform the dough or generically modify its shape and/or dimensions.

A further object of the present invention is to provide a cutting station for doughs for food use that has low costs and is relatively easy to provide in practice and safe in application.

This aim and these and other objects that will become more apparent hereinafter, are achieved by a cutting station for doughs for food use, of the type comprising a conveyor for conveying at least one continuous element constituted by dough for food use and at least one cutter which faces said conveyor, characterized in that it comprises
a fixed frame which surmounts said conveyor,
at least one motorized automatic chaser assembly, which supports the at least one said cutter and is coupled to said frame,
a control and management unit which is controlled by said conveyor and is meant to control the at least one actuator of said at least one motorized automatic chaser assembly.

Further characteristics and advantages of the invention will become better apparent from the description of a preferred but not exclusive embodiment of the cutting station for doughs for food use according to the invention, illustrated by way of non-limiting example in the accompanying drawings, wherein:

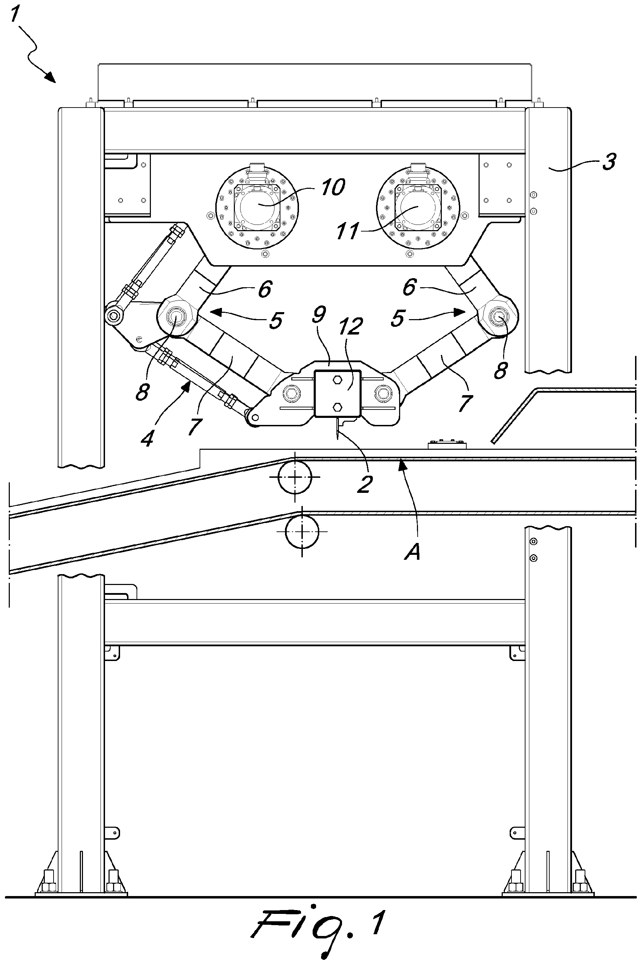

Figure 1 is a schematic front view of a cutting station for doughs for food use according to the invention;
Figure 2 is an enlarged-scale schematic front view of a first step of a cutting operation performed by the station of Figure 1;
Figure 3 is an enlarged-scale schematic front view of a second step of a cutting operation performed by the station of Figure 1;
Figure 4 is an enlarged-scale schematic front view of a third step of a cutting operation performed by the station of Figure 1;

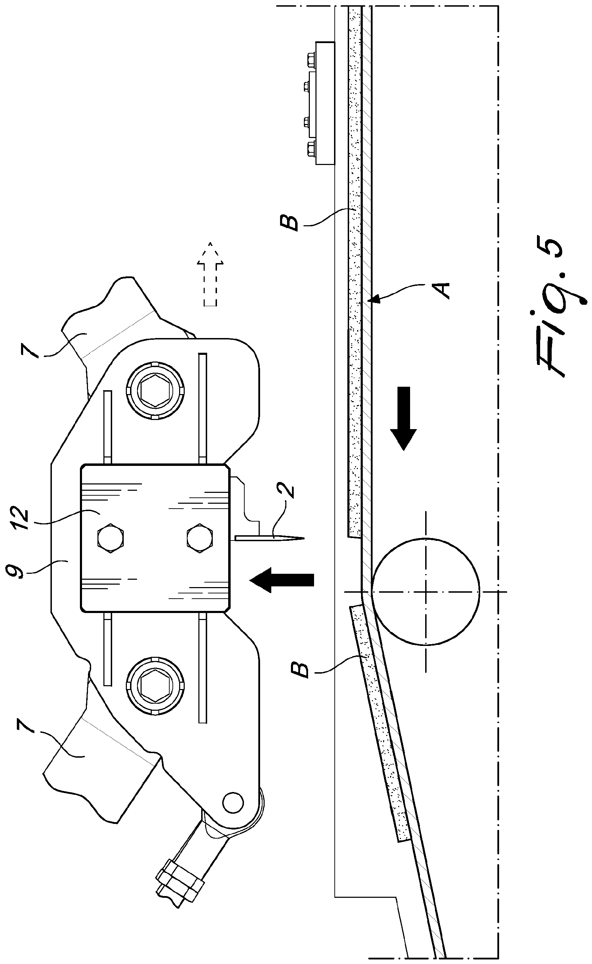

Figure 5 is an enlarged-scale schematic front view of a fourth step of a cutting operation performed by the station of Figure 1;

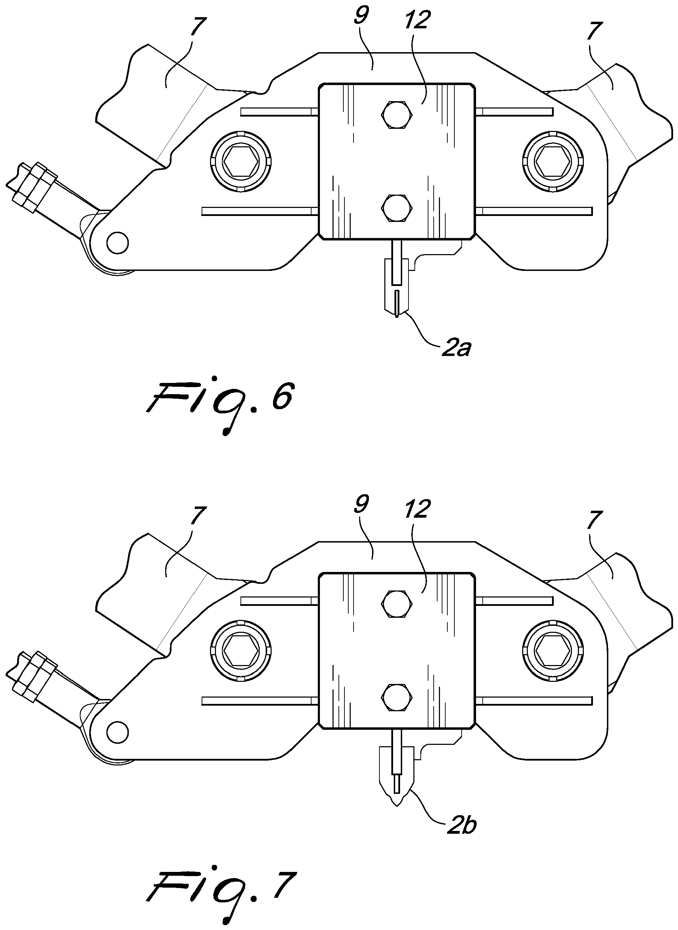

Figure 6 is an enlarged-scale schematic front view of a first alternative cutter for the machine of Figure 1;
Figure 7 is an enlarged-scale schematic front view of a second alternative cutter for the machine of Figure 1.

With reference to said figures, a cutting station for doughs for food use is generally designated by the reference numeral 1.

The station 1 is meant to be integrated and/or associated with a apparatus for the production of food products, particularly baked products. Said apparatus comprises a conveyor A for conveying at least one continuous element B constituted by dough for food use, with respect to which a cutter 2 of the cutting station 1 will have to provide portioning according to the dimensional standards provided for the finished product (the single portions of dough will be subjected to a baking process in an industrial oven).

The station 1 according to the invention conveniently comprises a fixed frame 3 which surmounts the conveyor A: more particularly, the frame 3 will surmount advantageously only part of the conveyor A, at which at least one dough element B has characteristics adapted to be subjected to the cutting operations.

The station 1 comprises furthermore at least one motorized automatic chaser assembly 4, which supports the at least one cutter 2.

The chaser assembly 4 is coupled to the frame 3 so that the cutter 2 can be moved, with respect to said frame 3, according to a specific law of motion.

Finally, the station 1 validly comprises a control and management unit which is controlled by the conveyor A and is meant to control the at least one actuator of the at least one motorized automatic chaser assembly 4.

The control and management unit, therefore, once the law of motion of the conveyor A is known (generally it is an advancement motion of the dough element B at constant speed), may control the actuators that are present in the chaser assembly 4 in order to perform a chasing cut.

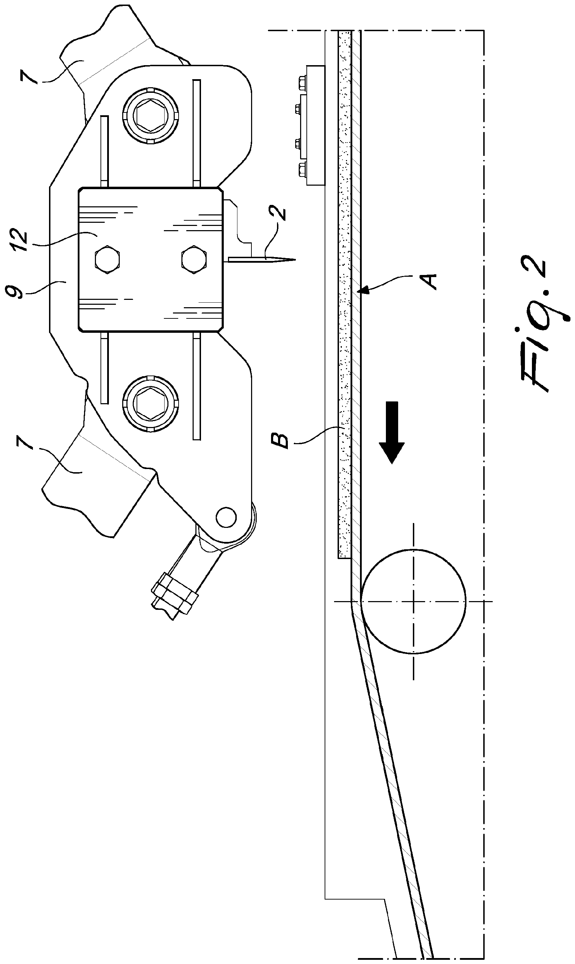

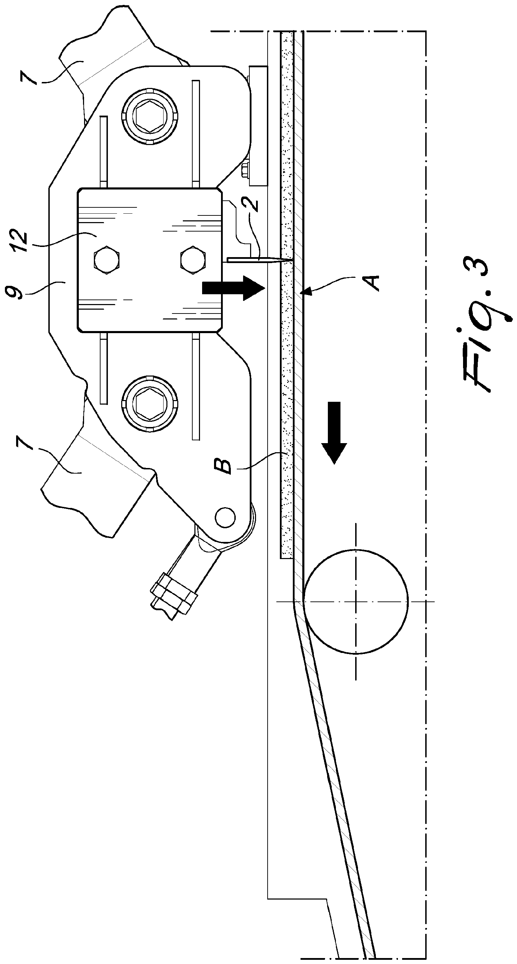

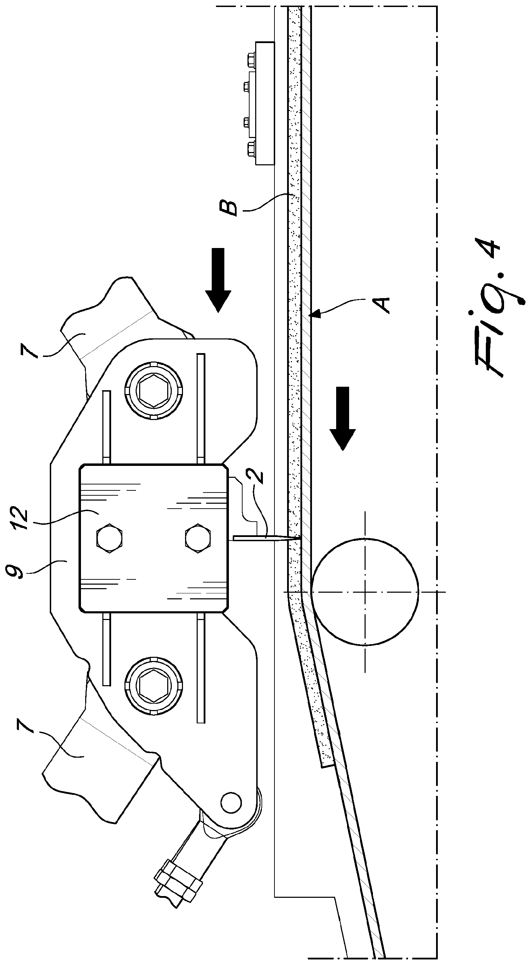

In particular, the control and management unit will control the actuators of the assembly 4 to perform a first movement that ensures the preventive alignment of the cutter 2 with the region of the dough element B to be cut (as shown schematically in the accompanying Figure 2); the actuators then make the cutter 2 descend until it produces an incision in the dough element B (as shown schematically in the accompanying Figure 3); the actuators will subsequently determine an advancement of the cutter 2, in a configuration for cutting the dough element B, for an extent of predefined length, moving at the same speed as the conveyor A (as shown schematically in the accompanying Figure 4); in a final step of the cutting operation, the cutter 2 is raised and the actuators make it move backward, performing said first movement.

The station 1 according to the invention has high versatility and therefore allows to manage the entry speed of the cutter 2 in the dough element B, synchronizing the motion of the cutter 2 with that of the underlying conveyor A and managing the exit speed of said cutter 2 from the element B on which the cut has been performed.

Another particularity of the station is the possibility to set the vertical stroke so that, if one has to cut dough elements B of different thickness (different height with respect to the surface of the conveyor A), it is possible to program the starting height of the cutter 2 at the beginning of the cycle, therefore making it possible to adapt the station 1 according to the invention to the execution of any specific cutting operation on any dough element B.

It is specified that the assembly 4 also allows the assignment of a simple vertical alternating motion to the cutter 2 (the motion of a traditional cutting guillotine), which is sufficient in cases in which the dough element B advances on the conveyor A at low speed.

According to the present invention the at least one motorized automatic chaser assembly 4 comprises at least one pair of articulated arms 5, each constituted by a pair of levers 6, 7 which are mutually hinged at one of their ends 8.

According to the present invention the free end of the second levers 7 is instead conveniently coupled rotatably to a band-like element 9 which is adapted, even indirectly, for the retention of the cutter 2.

According to the present invention each pair of articulated arms 5 comprises at least two controlled motors 10 and 11, controlled by the control and management unit; the motors 10 and 11 are advantageously coupled to the initial end, which can rotate with respect to the frame 3, of the articulated arms 5.

It is specified that the pairs of articulated arms 5 are two, are mutually opposite and are substantially aligned with the lateral edges of the conveyor A: this embodiment is particularly indicated if the dough elements B are distributed on the entire width of the conveyor A and therefore a cutter 2 at least equal in length to the width of the conveyor A is necessary.

The controlled motors 10 and 11 controlled by the control and management unit in this case are efficiently four.

Finally, it should be noted that within the scope of these embodiments, the controlled motors 10 and 11 controlled by the control and management unit are preferably brushless motors, since they allow to obtain the best results in terms of control of their dynamics.

In order to ensure the necessary versatility of the station 1, it is specified that the at least one motorized automatic chaser assembly 4 comprises conveniently at least one retention bracket 12, rigidly coupled to the band-like element 9, to which a cutter 2 can be fixed in a detachable and interchangeable manner.

One embodiment that is particularly efficient and adapted for specific types of doughs provides for the adoption of a retention bracket 12 associated with a pneumatic manifold connected to a specific external compressed air circuit: the manifold comprises in turn respective nozzles aligned with the cutter 2 for the delivery of compressed air flows directed onto said cutter 2, in order to perform a drying, cooling, cleaning and the like thereof.

When one works on very hydrated doughs, in fact, it can be necessary to subject the cutter 2 to a drying step at the end of each cutting operation in order to prevent, at subsequent cutting operations, the residual humidity on the surfaces of the cutter 2 from possibly causing an unwanted adhesion of the dough to said surfaces of the cutter 2.

Moreover, it is possible to install respective fixed elements for the mechanical cleaning of the surfaces of the cutter 2, if said operation is necessary due to specific characteristics of the treated dough B.

The fixed cleaning elements may, for example, be constituted by mutually facing brushes or spatulas, through which the cutter 2 can be made to translate, so that the bristles of the brushes or the terminal edge of the spatulas can remove the residues of dough B from the surfaces of the cutter 2.

It is specified that the cutters 2 that may be used in the station 1 according to the invention can have various and different shapes, as a function of the specific field of application. Each cutter may have a shape that is chosen preferably between a laminar shape with low thickness 2, with a brace-like terminal cross-section 2a, in which the central vertex constitutes the cutting edge, with a wedge-shaped terminal cross-section 2b, contoured for the specific provision of cutting lines on the fronts of the parted dough portions B and according to various further specific contours.

For example, for cutting highly hydrated dough elements B, such as doughs B for focaccia, specific types of bread and the like, the adoption of a cutter 2a or 2b ensures that the edges of the dough portion B that are adjacent to the cutting line are pressed onto themselves, avoiding the exposure of the dough to the external environment during leavening.

Any cutting operations that did not perform this pressing of the edges of each dough portion B might jeopardize or compromise the leavening process. It has thus been seen that each specific type of dough B requires an appropriate cutter 2, 2a, 2b in order to preserve the characteristics of said dough B.

Furthermore, the more the dough B is hydrated, the greater the permanence of contact of the cutter 2, 2a, 2b with said dough B must be, in order to ensure that cutting is precise and complete.

The station 1 according to the invention is particularly versatile, since it can be installed in any apparatus for processing doughs for food use, even as a replacement of cutting stations of a known type.

The protection offered by the present invention also extends to an apparatus for processing doughs for food use comprising an assembly for dispensing at least one element of dough B for food use with a substantially continuous longitudinal extension and a conveyor A for the conveyance of the at least one continuous dough element B.

According to the invention, the apparatus must furthermore advantageously comprise a cutting station 1 provided with a fixed frame 3 which surmounts the conveyor A, at least one motorized automatic chaser assembly 4, which supports the at least one cutter 2 and is coupled to the frame 3 and a control and management unit which is controlled by the conveyor A and is meant to control the at least one actuator of the at least one motorized automatic chaser assembly 4.

It is specified that the assembly for dispensing at least one dough B element for food use of said apparatus according to the invention is preferably chosen between an extruder and a sheeting element.

The conveyor A may be efficiently constituted by a conveyor belt, although other embodiments are not excluded.

The station 1 according to the invention allows to perform optimum cutting operations even at high advancement speeds of the dough element B on the conveyor A.

Merely by way of example, it is indicated that the station is capable of performing approximately 300 cuts per minute, ensuring a cutting length of 35 mm, on a dough element B having a substantially circular cross-section with a diameter of approximately 3.5 mm.

It should be pointed out conveniently that the station 1 according to the invention and any apparatus that comprises it may favorably operate on cereal flour-based doughs for food use of the leavened and/or unleavened type, and even on doughs for food use of a different type.

Advantageously, the present invention solves the problems described above, providing a cutting station 1 for doughs B for food use that can operate substantially at any advancement speed of the dough B on the respective conveyor belt (the conveyor A).

Conveniently, the station 1 according to the invention is particularly versatile, being adapted to perform any type of cutting on the dough B with any frequency.

Positively, the cutting station 1 according to the invention does not damage and does not deform (generally does not modify the shape and/or dimensions) the dough B by performing the cutting operations.

Validly, the cutting station 1 according to the invention is relatively easy to provide in practice and has low costs: these characteristics make the station 1 according to the invention an innovation of assured application.

The invention thus conceived is susceptible of numerous modifications and variations, all of which are within the appended claims; all the details may furthermore be replaced with other technically equivalent elements.

In the examplary embodiments shown, individual characteristics, given in relation to specific examples, may actually be interchanged with other different characteristics that exist in other examplary embodiments.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A cutting station (1) for doughs for food use, which is adapted to be integrated and/or associated with an apparatus for processing doughs for food use of the type comprising a conveyor (A) for conveying at least one continuous element (B) constituted by dough for food use,
said cutting station (1) comprising:
a fixed frame (3) adapted to surmount said conveyor (A),
at least one cutter (2) adapted to face said conveyor (A) when said a fixed frame (3) surmounts said conveyor (A),
at least one motorized automatic chaser assembly (4), which supports the at least one cutter (2) and is coupled to said frame (3),
a control and management unit which is configured to be controlled by said conveyor (A) when the cutting station is integrated and/or associated with said apparatus wherein the control and management unit is designed to control the at least one actuator of said at least one motorized automatic chaser assembly,
**characterized in that** said at least one motorized automatic chaser assembly (4) comprises at least one pair of articulated arms (5), each arm (5) being constituted by a pair of levers (6, 7) which are mutually hinged at one of their ends (8), the free end of said second levers (7) being coupled rotatably to a band-like element (9) which is adapted, even indirectly, for the retention of said cutter (2),
wherein said pair of articulated arms (5) comprises at least two controlled motors (10, 11), controlled by said control and management unit and coupled to an initial end, which can rotate with respect to said frame (3), of said articulated arms (5).

2. The cutting station according to claim 1, **characterized in that** said pairs of articulated arms (5) are two, are mutually opposite and are substantially aligned with the lateral edges of said conveyor (A), said controlled motors (10, 11) controlled by said control and management unit being four.

3. The cutting station according to claim 1, **characterized in that** said controlled motors (10, 11) controlled by said control and management unit are brushless motors.

4. The cutting station according to claim 1, **characterized in that** said at least one motorized automatic chaser assembly (4) comprises at least one bracket (12) for detachable and interchangeable retention for at least one respective cutter (2).

5. The cutting station according to claim 4, **characterized in that** said retention bracket (12) comprises a pneumatic manifold connected to a specific external compressed air circuit, said manifold comprising respective nozzles which are aligned with said cutter (2) for the delivery of compressed air flows onto said cutter (2), in order to perform a drying, cooling, cleaning and the like thereof.

6. The cutting station according to one or more of the preceding claims, **characterized in that** said cutter (2) has a shape that is chosen between:
- a laminar shape with low thickness (2);
- with a brace-like terminal cross-section (2a), in which the central vertex constitutes the cutting edge;
- with a wedge-shaped terminal cross-section (2b).

7. An apparatus for processing doughs for food use, comprising an assembly for dispensing at least one element of dough for food use (B) with a substantially continuous longitudinal extension, a conveyor (A) for the conveyance of said at least one continuous dough element (B), **characterized in that** it comprises a cutting station (1) according to one or more of the preceding claims,
wherein said fixed frame (3) is arranged to surmount said conveyor (A), said at least one cutter (2) faces said conveyor (A) and said control and management unit is controlled by said conveyor (A).

8. The apparatus according to claim 7, **characterized in that** said assembly for dispensing at least one dough element (B) for food use with substantially continuous longitudinal extension is chosen between an extruder and a sheeting element.

## Patentansprüche

1. Eine Schneidestation (1) für Teige zur Verwendung in Lebensmitteln, die ausgebildet ist, um in eine Vorrichtung zur Verarbeitung von Teigen zur Verwendung in Lebensmitteln integriert und/oder mit ihr verbunden zu werden, von der Art, die einen Förderer (A) zum Fördern mindestens eines durchgehenden Elements (B) umfasst, das aus Teig zur Verwendung in Lebensmitteln besteht,
wobei die Schneidestation (1) Folgendes umfasst:
einen festen Rahmen (3), ausgebildet, um den Förderer (A) zu überragen,
mindestens eine Schneidevorrichtung (2), ausgebildet, um dem Förderer (A) zugewandt zu sein, wenn der feste Rahmen (3) den Förderer (A) überragt,
mindestens ein motorisierter automatischer Strehleraufbau (4), der die mindestens eine Schneidevorrichtung (2) trägt und mit dem Rahmen (3) verbunden ist,
eine Steuerungs- und Verwaltungseinheit, die konfiguriert ist, um von dem Förderer (A) gesteuert zu werden, wenn die Schneidestation in die Vorrichtung integriert und/oder mit ihr verbunden ist, wobei die Steuerungs- und Verwaltungseinheit konstruiert ist, um das mindestens eine Antriebselement des mindestens einen motorisierten automatischen Strehleraufbaus zu steuern;
**dadurch gekennzeichnet, dass** der mindestens eine motorisierte automatische Strehleraufbau (4) mindestens ein Paar von Gelenkarmen (5) umfasst, wobei jeder Arm (5) aus einem Paar von Hebeln (6, 7) besteht, die an einem ihrer Enden (8) gelenkig miteinander verbunden sind, wobei das freie Ende der zweiten Hebel (7) drehbar mit einem bundartigen Element (9) gekoppelt ist, welches, auch indirekt, zum Halten der Schneidevorrichtung (2) ausgebildet ist;
wobei das Paar von Gelenkarmen (5) mindestens zwei gesteuerte Motoren (10, 11) umfasst, die von der Steuerungs- und Verwaltungseinheit gesteuert und mit einem Anfangsende der Gelenkarme (5) gekoppelt sind, das sich mit Bezug auf den Rahmen (3) drehen kann.

2. Die Schneidestation gemäß Anspruch 1, **dadurch gekennzeichnet, dass** die Paare von Gelenkarmen (5) zwei an der Zahl sind, einander gegenüberliegen und im Wesentlichen mit den Seitenkanten des Förderers (A) ausgerichtet sind, wobei die gesteuerten Motoren (10, 11), die von der Steuerungs- und Verwaltungseinheit gesteuert sind, vier an der Zahl sind.

3. Die Schneidestation gemäß Anspruch 1, **dadurch gekennzeichnet, dass** die gesteuerten Motoren (10, 11), die von der Steuerungs- und Verwaltungseinheit gesteuert sind, bürstenlose Motoren sind.

4. Die Schneidestation gemäß Anspruch 1, **dadurch gekennzeichnet, dass** der mindestens eine motorisierte automatische Strehleraufbau (4) mindestens einen Träger (12) zur lösbaren und austauschbaren Halterung mindestens einer entsprechenden Schneidevorrichtung (2) umfasst.

5. Die Schneidestation gemäß Anspruch 4, **dadurch gekennzeichnet, dass** der Halteträger (12) einen Druckluftverteiler umfasst, der an einen spezifischen externen Druckluftkreislauf angeschlossen ist, wobei der Verteiler entsprechende Düsen umfasst, die zur Abgabe von Druckluftströmen an die Schneidevorrichtung (2) mit der Schneidevorrichtung (2) ausgerichtet sind, um eine Trocknung, Kühlung, Reinigung und dergleichen derselben durchzuführen.

6. Die Schneidestation gemäß einem oder mehreren der obigen Ansprüche, **dadurch gekennzeichnet, dass** die Schneidevorrichtung (2) eine Form hat, die gewählt ist aus
- einer laminaren Form mit geringer Dicke (2)
- mit einem strebenartigen terminalen Querschnitt (2a), bei dem der zentrale Scheitelpunkt die Schneidkante bildet;
- mit einem keilförmigen terminalen Querschnitt (2b).

7. Eine Vorrichtung zur Verarbeitung von Teigen zur Verwendung in Lebensmitteln, die Folgendes umfasst: einen Aufbau für die Abgabe mindestens eines Elements von Teig zur Verwendung in Lebensmitteln (B) mit einer im Wesentlichen durchgehenden Längserstreckung; einen Förderer (A) zum Fördern des mindestens einen durchgehenden Teigelements (B); **dadurch gekennzeichnet, dass** sie eine Schneidestation (1) gemäß einem oder mehreren der obigen Ansprüche umfasst;
wobei der feste Rahmen (3) angeordnet ist, um den Förderer (A) zu überragen, die mindestens eine Schneidevorrichtung (2) dem Förderer (A) zugewandt ist und die Steuerungs- und Verwaltungseinheit von dem Förderer (A) gesteuert ist.

8. Die Vorrichtung gemäß Anspruch 7, **dadurch gekennzeichnet, dass** der Aufbau zur Abgabe mindestens eines Teigelements (B) zur Verwendung in Lebensmitteln mit einer im Wesentlichen durchgehenden Längserstreckung gewählt ist aus einem Extruder und einem Lagen bildenden Element.

## Revendications

1. Station de coupe (1) pour pâtes à usage alimentaire, qui est adaptée pour être intégrée et/ou associée à un appareil de traitement de pâtes à usage alimentaire du type comprenant un transporteur (A) pour transporter au moins un élément continu (B) constitué par la pâte à usage alimentaire,
ladite station de coupe (1) comprenant :
un bâti fixe (3) adapté pour surmonter ledit transporteur (A),
au moins un dispositif de coupe (2) adapté pour faire face audit transporteur (A) lorsque ledit bâti fixe (3) surmonte ledit transporteur (A),
au moins un ensemble de suivi automatique motorisé (4) qui supporte le au moins un dispositif de coupe (2) et est couplé audit bâti (3),
une unité de contrôle et de gestion qui est configurée pour être contrôlée par ledit transporteur (A) lorsque la station de coupe est intégrée et/ou associée audit appareil, dans laquelle l'unité de contrôle et de gestion est conçue pour contrôler ledit au moins un ensemble de suivi automatique motorisé,
**caractérisé en ce que** ledit au moins un ensemble de suivi automatique motorisé (4) comprend au moins une paire de bras articulés (5), chaque bras (5) étant constitué par une paire de leviers (6, 7) qui sont mutuellement articulés au niveau de l'une de leurs extrémités (8), l'extrémité libre desdits seconds leviers (7) étant couplée en rotation à un élément en forme de bande (9) qui est adapté, même indirectement, pour la retenue dudit dispositif de coupe (2),
dans laquelle ladite paire de bras articulés (5) comprend au moins deux moteurs contrôlés (10, 11), contrôlés par ladite unité de contrôle et de gestion et couplés à une extrémité initiale, qui peuvent tourner par rapport audit bâti (3) desdits bras articulés (5).

2. Station de coupe selon la revendication 1, **caractérisée en ce que** lesdites paires de bras articulés (5) sont au nombre de deux, sont mutuellement opposées et sont sensiblement alignées avec les bords latéraux dudit transporteur (A), lesdits moteurs contrôlés (10, 11) contrôlés par ladite unité de contrôle et de gestion étant au nombre de quatre.

3. Station de coupe selon la revendication 1, **caractérisée en ce que** lesdits moteurs contrôlés (10, 11) contrôlés par ladite unité de contrôle et de gestion sont des moteurs sans balai.

4. Station de coupe selon la revendication 1, **caractérisé en ce que** ledit au moins un ensemble de suivi automatique motorisé (4) comprend au moins un support (12) pour la retenue détachable et interchangeable pour au moins un dispositif de coupe (2) respectif.

5. Station de coupe selon la revendication 4, **caractérisée en ce que** ledit support de retenue (12) comprend un collecteur pneumatique raccordé à un circuit d'air comprimé externe spécifique, ledit collecteur comprenant des buses respectives qui sont alignées avec ledit dispositif de coupe (2) pour la distribution des flux d'air comprimé sur ledit dispositif de coupe (2), afin de réaliser son séchage, son refroidissement, son nettoyage et similaire.

6. Station de coupe selon une ou plusieurs des revendications précédentes, **caractérisé en ce que** ledit dispositif de coupe (2) a une forme qui est choisie entre :
une forme laminaire à faible épaisseur (2) ;
avec une section transversale terminale en forme de parenthèses (2a), dans laquelle le sommet central constitue l'arête de coupe ;
avec une section transversale terminale en forme de coin (2b).

7. Appareil de traitement de pâtes à usage alimentaire, comprenant un ensemble pour distribuer au moins un élément de pâte à usage alimentaire (B) avec une extension longitudinale sensible continue, un transporteur (A) pour le transport dudit au moins un élément de pâte continu (B), **caractérisé en ce qu'**il comprend une station de coupe (1) selon une ou plusieurs des revendications précédentes,
dans lequel ledit bâti fixe (3) est agencé pour surmonter ledit transporteur (A), ledit au moins un dispositif de coupe (2) fait face audit transporteur (A) et ladite unité de contrôle et de gestion est contrôlée par ledit transporteur (A).

8. Appareil selon la revendication 7, **caractérisé en ce que** ledit ensemble pour distribuer au moins un élément de pâte (B) à usage alimentaire avec une extension longitudinale sensiblement continue est choisi entre une extrudeuse et un élément de laminage.
